# EUROPÄISCHE PATENTSCHRIFT

(11) **EP 1 236 011 B1**
(45) Veröffentlichungstag und Bekanntmachung des Hinweises auf die Patenterteilung: **23.02.2005**
(21) Anmeldenummer: 00993334.2
(22) Anmeldetag: 07.12.2000
(51) Int. Cl.: F25B 15/10

(54) **ABSORPTIONSKÜHLANORDNUNG**
ABSORPTION COOLING DEVICE
DISPOSITIF REFRIGERANT A ABSORPTION

(30) Priorität: 07.12.1999 DE 19958955
(43) Veröffentlichungstag der Anmeldung: 04.09.2002
(73) Patentinhaber: Dometic GmbH, 57074 Siegen (DE)
(72) Erfinder: KORINTH, Christoph, 57555 Mudersbach (DE)
(74) Vertreter: GROSSE BOCKHORNI SCHUMACHER
(86) Internationale Anmeldenummer: PCT/EP2000/012360
(87) Internationale Veröffentlichungsnummer: WO 2001/042723

(56) Entgegenhaltungen:
- EP-A- 0 134 176
- DE-A- 19 516 630
- DE-C- 625 571
- FR-A- 772 935
- GB-A- 486 815
- US-A- 2 240 540
- US-A- 3 715 896

## Beschreibung

Die Erfindung betrifft eine Absorptionskühlanordnung zum Betrieb eines thermodynamischen Kühlkreislaufs derart, daß der Kühlkreislauf aus einem zu kühlenden Raum Wärme aufnimmt. Eine derartige Kühlanordnung wird herkömmlicherweise beispielsweise dazu verwendet, ein Kühlfach eines Kühlmöbels oder dergleichen gegenüber einer Umgebung abzukühlen.

Bei der herkömmlichen, nach dem sogenannten Absorptionsverfahren betriebenen Kühlanordnung, wird ein Arbeitsmittel, meist Ammoniak, welches in einem Lösungsmittel, meist Wasser, löslich ist, im Kreislauf geführt. Dieser Kreislauf umfasst einen auch als Kocher oder Pumpe bezeichneten Austreiber, einen Kondensator, einen Verdampfer und einen Absorber. In dem Austreiber wird das Arbeitsmittel aus dem mit Arbeitsmittel angereicherten Lösungsmittel unter Zuführung externer Energie durch beispielsweise eine Heizung ausgetrieben. In gasförmigem Zustand wird das Arbeitsmittel von dem Austreiber zu dem Kondensator überführt, in welchem das Arbeitsmittel Wärme an die Umgebung abgibt, abkühlt und schließlich kondensiert. Das kondensierte Arbeitsmittel wird von dem Kondensator zum Verdampfer überführt, wo es unter Aufnahme von Wärme auf niedrigem Niveau, beispielsweise im Verdampfer eines Kühlschranks, verdampft und im dampfförmigen Zustand zum Absorber überführt wird. In dem Absorber wird das Arbeitsmittel unter Abgabe von Wärme in dem Lösungsmittel absorbiert und sodann in in dem Lösungsmittel gelöster Form wieder dem Austreiber zugeführt, wodurch der beschriebene Arbeitsmittelkreislauf geschlossen ist.

Da der Transport des Arbeitsmittels von dem Absorber zu dem Austreiber in in dem Lösungsmittel gelöster Form erfolgt und das Lösungsmittel, welches aufgrund der Wirkung des Austreibers an Arbeitsmittel abgereichert ist, wiederum dem Absorber zugeführt wird, um dort mit Arbeitsmittel angereichert zu werden, besteht zwischen Austreiber und Absorber ein sogenannter Lösungsmittelkreislauf.

In diesem Lösungsmittelkreislauf wird dem Austreiber mit Arbeitsmittel beladenes Lösungsmittel in flüssiger Form über eine Verbindungsleitung oder ähnliches zugeführt, wobei die Verbindungsleitung an einen sich an den Absorber anschließenden Vorratsbehälter angeschlossen ist. Über diesen Vorratsbehälter kann das Arbeitsmittel in den Arbeitsmittelkreislauf eingefüllt werden. Aufgrund der Schwerkraftwirkung sammelt sich das Lösungsmittel als Flüssigkeitsvolumen in dem Vorratsbehälter, wobei sich entsprechend der Menge an Lösungsmittelvolumen ein Flüssigkeitsspiegel bzw. eine Flüssigkeitsoberfläche des Lösungsmittelvolumens ausbildet. Unterhalb dieses Flüssigkeitsspiegels liegt das Lösungsmittel zusammen mit dem darin gelösten Arbeitsmittel in flüssiger Form vor, während über diesem Flüssigkeitsspiegel eine Gasatmosphäre aus gasförmigem Lösungsmittel, Arbeitsmittel und gegebenenfalls einem Hilfsgas zum Betrieb des Arbeitsmittelkreislaufs und weiteren Gasen besteht.

Dem beschriebenen Flüssigkeitsvolumen wird das mit Arbeitsmittel angereicherte Lösungsmittel aus dem Absorber zugeführt, wobei dieses mit Arbeitsmittel angereicherte Lösungsmittel als stetiges Rinnsal oder tropfenweise den Flüssigkeitsspiegel durchdringt und somit in das auf niedrigem Höhenniveau stehende Flüssigkeitsvolumen übergeht. Der Vorratsbehälter nimmt daher nicht nur einen erheblichen Teil des Arbeitsmediums auf, um dieses für den Arbeitsmittelkreislauf zu bevorraten, sondern er stellt dem Kreislauf auch durch eine vergrößerte Oberfläche Absorberfläche für eine Restabsorption zur Verfügung. Schließlich dient er als Höhenausgleich des Füllstandes im Austreiber und stellt die Verbindung von Austreiber, Verdampfer, Absorber und eventuell Kondensator sowie Syphonrohr her.

Obwohl die vorbekannte Vorrichtung an sich befriedigend arbeitet, hat sich doch gezeigt, daß die Konstruktion systembedingte und konstruktive Nachteile aufweist. So wird ein großer Anteil des Arbeitsmediums ohne funktionelle Wirkung im Vorratsbehälter gespeichert, um nach und nach dem Austreiber zugeleitet zu werden. Ein erheblicher Teil der Flüssigkeit des Behälters nimmt nicht an der eigentlichen Absortion teil, sondern dient nur in unzureichendem Maße einer Restabsorption. Durch die funktionelle Teilung des Arbeitsmediums in einen aktiven und einen inaktiven Teil besteht ein erheblicher Bedarf an einem großen Gesamtvolumen des Kältemittels, was einen erhöhten Anteil an umweltschädlichem Ammoniak und Chromatanteilen zur Folge hat, die auch bei der Entsorgung Probleme aufwerfen. Schließlich bedingt die oben beschriebene Vorrichtung eine aufwendige konstruktive Abstimmung zwischen dem Behälter und dem Austreiber, um ein geeignetes Flüssigkeitsniveau bereitzustellen. Zur Aufnahme des großen Flüssigkeitsvolumens und zur Bereitstellung einer großen Absorptions- und Kühlfläche muß der Behälter großvolumig ausgebildet sein, und weist daher neben seinen Anschlüssen für die unterschiedlichen Aggregatskomponenten wie Absorber, Verdampfer, Austreiber, Kondensator, Syphonrohr und Füllventil zahlreiche Schweißnahtverbindungen auf, so daß die Gefahr von Leckagen erhöht ist.

DE-A-195 16 630 zeigt ein Absorptionskühlaggregat mit einem Lösungsmittelkreislaufund einem Arbeitsmittelkreislauf, wobei ein Vorratsbehälter das mit Ammoniak angereicherte Lösungsmittel sammelt bevor es über eine Verbindungsleitung einem Austreiber zugeführt wird. Der Vorratsbehälter hat eine Mehrzahl von Anschlüssen und weist dadurch eine aufwendige Konstruktion auf, und er beansprucht einen großen Anteil des Bauvolumens in dem Aggregat.

Der Erfindung liegt daher die Aufgabe zugrunde, eine Absorptoinskühlanordnung der bekannten Art derart zu verbessern, daß bei gleicher Kühlleistung eine kleinere Bevorratung des Kühlmittels erforderlich ist und damit gleichzeitig der Entsorgungsaufwand reduziert wird. Die Anordnung soll ferner einen geringeren konstruktiven Aufwand erfordern und mit geringem Gewicht gleichzeitig kostengünstig herstellbar sein.

Die Erfindung geht hierbei aus von einer Absorptionskühlanordnung mit
- einem Austreiber zum Austreiben eines Arbeitsmittels in Gasform aus angereichertem Lösungsmittel zum Abreichern des Arbeitsmittels in einem Lösungsmittelkreislauf,
- einer ersten Verbindungsleitung zum Überführen des ausgetriebenen Arbeitsmittels von dem Austreiber zu einem Kondensator zum Kondensieren des ausgetriebenen Arbeitsmittels,
- einer zweiten Verbindungsleitung zum Überführen des kondensierten Arbeitsmittels von dem Kondensator zu einem Verdampfer zum Verdampfen des kondensierten Arbeitsmittels unter Aufnahme von Wärme von einer zu kühlenden Fläche,
- einer dritten Verbindungsleitung zum Überführen des verdampften Arbeitsmittels von dem Verdampfer zu einer Absorberanordnung,
- einer vierten Verbindungsleitung zum Überführen des an Arbeitsmittel abgereicherten Lösungsmittels von dem Austreiber zu der Absorberanordnung, wobei die Absorberanordnung eine sich über eine vorbestimmte Höhendifferenz erstreckende Gegenstrom-Austauschstrecke aufweist, in welche die dritte Verbindungleitung auf einem niedrigen Höhenniveau mündet und in welche die vierte Verbindungsleitung auf einem hohen Höhenniveau mündet, so daß sich in der Absorberanordnung das Arbeitsmittel in dem Lösungsmittel anreichert,
- einer fünften Verbindungsleitung zum Überführen des mit Arbeitsmittel angereicherten Lösungsmittels von dem Absorber zu dem Austreiber,

Hierbei ist wenigstens ein Teil der fünften Verbindungsleitung mit einem Flüssiganteil des Lösungsmittels gefüllt, und in einem Bereich eines dem Austreiber zugewandten Endes der fünften Verbindungsleitung oder in dem Austreiber selbst ist ein erster Flüssigkeitsspiegel des Lösungsmittels ausgebildet, wobei sich ein korrespondierender zweiter Flüssigkeitsspiegel, der über die fünfte Verbindungsleitung mit dem ersten Flüssigkeitsspiegel kommuniziert, ausgebildet ist.

Ein erster Aspekt der Erfindung beruht auf der Idee, die Gesamtoberfläche des zweiten Flüssigkeitsspiegels vergleichsweise klein auszugestalten und das Gesamtvolumen des Arbeitsmittels dadurch zu verringern, daß nur ein aktiver Anteil des Arbeitsmittels in dem Absorptionsprozeß eingesetzt wird und nicht ein inaktiver Anteil zur Bevorratung genutzt wird. Wie später noch erläutert wird, kann dadurch die konstruktive Auspegelung des Flüssigkeitsnivcaus zum Austreiber in einfacher Weise erreicht werden. Das System muß nur mit der für die Ausbildung des Absorptionsprozesses benötigten Menge an Arbeitsmittel (Ammoniak, Wasser, Inhibitor ) befüllt werden. Dadurch ergeben sich die Vorteile, daß die Menge der Betriebsstoffe/Schadstoffe Ammoniak, Wasser, Korrosionsinhibitor verringert und damit auch die im Zusammenhang mit einer späteren Entsorgung (Kosten, Gefahrenpotential) entstehenden Probleme reduziert werden. Durch ein kleineres Gesamtvolumen können Kosten und Gewicht eingespart werden und durch die direkte Einleitung des absorbierenden Arbeitsmediums in den Wärmetauscher wird die entstehende Absorptionswärme besser ausgenutzt. Schließlich wird die Betriebssicherheit (Druckfestigkeit) dadurch erhöht, daß im Verhältnis zu herkömmlichen Absorptionskühlanordnungen weniger Schweißverbindungen zur Anwendung kommen.

Bei einer kleinen Ausgestaltung der Gesamtoberfläche des zweiten Flüssigkeitsspiegels bewirkt eine wenigstens einem Teil der Gesamtoberfläche aus dem Absorber unmittelbar zugeführte Menge an mit Arbeitsmittel angereichertem Lösungsmittel eine vergleichsweise große Änderung der Arbeitsn ittelkonzentration in dem Lösungsmittel unmittelbar unter dem zweiten Flüssigkeitsspiegel. Hierdurch werden insbesondere während der Startphase der Kühlanordnung, in welcher Änderungen der Konzentration des Arbeitsmittels in dem Lösungsmittel regelmäßig auftreten, diese Konzentrationsänderungen schnell auf das dem Austreiber wieder zugeführte Lösungsmittel übertragen, so daß ein weitgehend unmittelbarer Übergang in den stationären Betriebszustand möglich ist.

Als vorteilhaft hat sich herausgestellt, die Gesamtoberfläche des zweiten Flüssigkeitsspiegels auf einen entsprechend bestimmten mittleren Querschnitt der fünften Verbindungsleitung oder der vierten Verbindungsleitung zu beziehen. Insbesondere ist es hierbei vorteilhaft, die Gesamtoberfläche des zweiten Flüssigkeitsspiegels kleiner als das Zehnfache, insbesondere kleiner als das Achtfache, insbesondere kleiner als das Fünffache, insbesondere kleiner als das Dreifache und insbesondere kleiner als das Doppelte dieses mittleren Querschnitts auszubilden. Insbesondere kann die Gesamtoberfläche des zweiten Flüssigkeitsspiegels auch in etwa gleich diesem Querschnitt ausgebildet sein.

Hierbei ist es möglich, daß die Gesamtoberfläche des zweiten Flüssigkeitsspiegels zusammengesetzt ist aus mehreren für sich jeweils vollständig umgrenzten Teiloberflächen des zweiten Flüssigkeitsspiegels, welche sich innerhalb räumlich getrennter Komponenten der Kühlanordnung auf einander entsprechendem Höhenniveau ausbilden.

Gemäß einem zweiten Aspekt zeichnet sich die Erfindung dadurch aus, daß der zweite Flüssigkeitsspiegel umgrenzt ist durch wenigstens eine oder mehrere der Komponenten einer Gruppe von Komponenten, welche die fünfte Verbindungsleitung, und zwar in einem Bereich eines dem Absorber zugewandten Endes desselben, den Absorber und die Dritte Verbindungsleitung, und zwar in einem Bereich eines der Mündung in den Absorber zugewandten Endes desselben, umfaßt. Durch diese Maßnahme wird die Gestalt des zweiten Flüssigkeitsspiegels mitbestimmt durch die Gestalt der Komponenten dieser Gruppe.

Hierbei ist die Gestalt dieser Komponenten selbst im Hinblick auf die zum Betrieb der Kühlanordnung der jeweiligen Komponente zugedachte Funktion ausgelegt. Das heißt, daß die Querschnitte der dritten und fünften Verbindungsleitung derart ausgelegt sind, daß die Verbindungsleitungen ihre Funktion zum Überführen des verdampften Arbeitsmittels von dem Verdampfer zu der Absorberanordnung beziehungsweise zum Überführen des mit Arbeitsmittel angereicherten Lösungsmittel von dem Absorber zum Austreiber in Bezug auf Betriebsbedingungen und Herstellbarkeit der Kühlanordnung optimal erfüllen. Gleiches gilt für den Absorber, welcher im wesentlichen dahingehend ausgelegt ist, eine Gegenstrom-Austauschstrecke bereitzustellen, in welcher das Arbeitsmittel in dem Lösungsmittel angereichert wird.

Hieraus folgt, daß der zweite Flüssigkeitsspiegel sich in Komponenten der Kühlanordnung ausbildet, welche nicht im Hinblick auf eine große Gesamtoberfläche des Flüssigkeitsspiegels ausgelegt sind, wie dies bei der herkömmlichen Kühlanordnung der Fall war, bei welcher sich der zweite Flüssigkeitsspiegel in einer von den Komponenten der oben genannten Gruppe von Komponenten funktionell grundlegend verschiedenen Komponente, nämlich einem Reservoir für das Lösungsmittel, ausgebildet ist.

Vorteilhafterweise sind an der Umgrenzung des zweiten Flüssigkeitsspiegels keine weiteren Komponenten, sondern ausschließlich die Komponenten der Gruppe beteiligt.

Obwohl mit der Kühlanordnung ein vergleichsweise schnelles Erreichen des stationären Betriebszustands möglich ist, sind dennoch Änderungen in der Höhe beziehungsweise dem Niveau des ersten beziehungsweise des zweiten Flüssigkeitsspiegels während der Anlaufphase der Kühlanordnung möglich. Insbesondere kann das Niveau des ersten beziehungsweise des zweiten Flüssigkeitsspiegels während der Startphase der Kühlanordnung absinken.

Vorteilhafterweise ist die Menge an Lösungsmittel und auch die Menge an Arbeitsmittel derart bemessen, daß die gesamte Oberfläche des zweiten Flüssigkeitsspiegels wenigstens während des stationären Betriebs der Kühlanordnung durch die fünfte Verbindungsleitung umgrenzt ist.

Alternativ hierzu kann, ebenfalls bevorzugt, die Oberfläche des zweiten Flüssigkeitsspiegels wenigstens während des stationären Betriebs der Kühlanordnung durch den Absorber umgrenzt sein.

Hierbei umfasst die Gegenstrom- Austauschstrecke des Absorbers vorzugsweise ein schräg zur Horizontalen sich erstreckendes Rohr, in welchem das dem Absorber auf hohem Höhenniveau zugeführte Lösungsmittel herabrinnt und sich dabei mit Arbeitsmittel anreichert. Dieses Rohr kann dann vorteilhafterweise zur Umgrenzung des zweiten Flüssigkeitsspiegels dienen.

Alternativ hierzu ist bevorzugterweise vorgesehen, daß sich das Rohr der Gegenstrom-Austauschstrecke insbesondere einstückig in einem Rohrfortsatz aus der Gegenstrom-Austauschstrecke derart heraus erstreckt, daß dieser Rohrfortsatz die Oberfläche des zweiten Flüssigkeitsspiegels umgrenzt. Der Rohrfortsatz kann hierbei nahtlos oder unter Bildung einer Schweiß- oder Lötnaht an das eigentliche Rohr der Gegenstrom-Austauschstrecke angeschlossen sein.

Vorteilhafterweise ist die Flüssigkeitsmenge in der Kühlanordnung derart bemessen, daß der zweite Flüssigkeitsspiegel während der Startphase des Betriebs der Anordnung durch die dritte Verbindungsleitung umgrenzt ist. Hierbei kann dann der Flüssigkeitsspiegel während des Betriebs der Anordnung absinken, so daß er dann später das vorangehend beschriebene Niveau einnimmt und auch der Übertritt des verdampften Arbeitsmittels in die Absorberanordnung ungehindert erfolgen kann.

Im Hinblick auf eine einfache Herstellung mündet die dritte Verbindungsleitung zum Zufuhren des verdampften Arbeitsmittels von dem Verdampfer zu der Absorberanordnung in das schräg zur Horizontalen sich erstreckende Rohr an einer Stelle, an der sich das Rohr beidseits der Mündungsstelle, insbesondere im wesentlichen gradlinig, erstreckt. Hierdurch kann die Verbindung zwischen dem Rohr und der dritten Verbindungsleitung einfach in Form eines T-Stücks ausgebildet sein, wobei der horizontale Balken des "T" mit dem Rohr ausgerichtet ist und der vertikale Balken des "T" mit dem Ende der dritten Verbindungsleitung ausgerichtet ist.

Hierbei ist bevorzugterweise, ebenfalls im Hinblick auf eine einfache Herstellbarkeit, die fünfte Verbindungsleitung zum Überführen des mit Arbeitsmittel angereicherten Lösungsmittels von dem Absorber zum Austreiber derart an den Absorber gekoppelt, daß die fünfte Verbindungsleitung unmittelbar in das Rohr der Gegenstrom-Austauschstrecke oder einen Fortsatz desselben mündet.

Weiterhin wird die Absorptionskühlanordnung bevorzugterweise mit einem Hilfsgas betrieben, welches den Transport des Arbeitsmittels in seiner gasförmigen Form unterstützt. Hierzu ist vorteilhafterweise eine sechste Verbindungsleitung zum Überführen des Hilfsgases von dem Absorber zu dem Verdampfer vorgesehen, wobei die sechste Verbindungsleitung auf einem hohen Höhenniveau in den Verdampfer mündet.

Ferner ist im Hinblick auf einen guten energetischen Wirkungsgrad der Kühlanordnung ein Flüssigkeitswärmetauscher vorgesehen, in welchem sich die vierte Verbindungsleitung und die fünfte Verbindungsleitung bereichsweise unter Bildung eines Gegenstrom-Wärmekontakts nebeneinander erstrecken.

Damit die Absorptionsfläche der Absorptionskühlanordnung in etwa der Absorptionsfläche einer Anordnung mit einem Vorratsbehälter entspricht, wird gemäß einem weiteren vorteilhaften Merkmal der Erfindung dafür gesorgt, daß die Absorptionsfläche des Vorratsbehälters bei gleichbleibender Gesamtabsorptionsfläche durch Vergrößerung der Absorptionsfläche der Gegenstrom-Austauschstrecke der Absorberanordnung in diese integriert ist. Dies kann in vorteilhafter Weise dadurch geschehen, daß die Absorptionsfläche des Vorratsbehälters durch Verlängerung der Gegenstrom-Austauschstrecke der Absorberanordnung in diese integriert ist oder daß die Absorptionsfläche des Vorratsbehälters durch eine Querschnittsvergrößerung der Rohrleitung der Gegenstrom-Austauschstrecke der Absorberanordnung in diese integriert ist oder daß die Absorptionsfläche des Vorratsbehälters durch Oberflächenvergrößerung der Innenwandung der Rohrleitung der Gegenstrom-Austauschstrecke der Absorberanordnung mittels an der Wandung angeordneter Rillen in diese integriert ist.. Die Rillen können vorteilhaft in zwei verschiedenen Richtungen verlaufen und sich jeweils kreuzen.

Weitere Merkmale, Vorteile und Einzelheiten der Erfindung ergeben sich aus der nachfolgenden Beschreibung bevorzugter Ausführungsbeispiele anhand der Zeichnung. Darin zeigen:
- Fig. 1: eine Absorptionskühlanordnung gemäß einer ersten Ausführungsform der Erfindung,
- Fig. 2: eine schematische Darstellung der wesentlichen funktionellen Aufgaben der einzelnen Komponenten der in Fig. 1 dargestellten Absorptionskühlanordnung,
- Fig. 3: eine Detailansicht der in Fig. 1 dargestellten Absorptionskühlanordnung zur Erläuterung eines Hilfsgaskreislaufs derselben,
- Fig. 4: eine vergrößerte Darstellung der Fig. 1 zur Erläuterung von sich ausbildenden Flüssigkeitsspiegeln,
- Fig. 5: eine der Fig. 4 entsprechende Darstellung einer weiteren Ausführungsform der Erfindung mit einem abgeänderten Flüssigkeitsspiegel und
- Fig. 6: eine der Fig. 4 ähnliche Darstellung einer weiteren abgewandelten Ausführungsform der Erfindung.

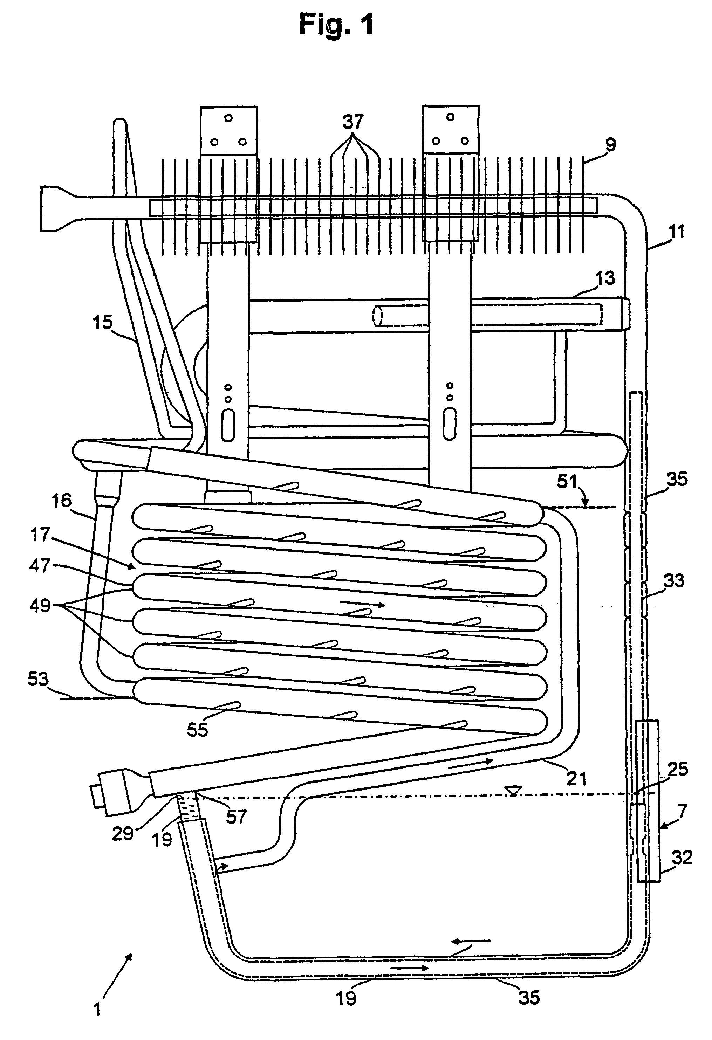

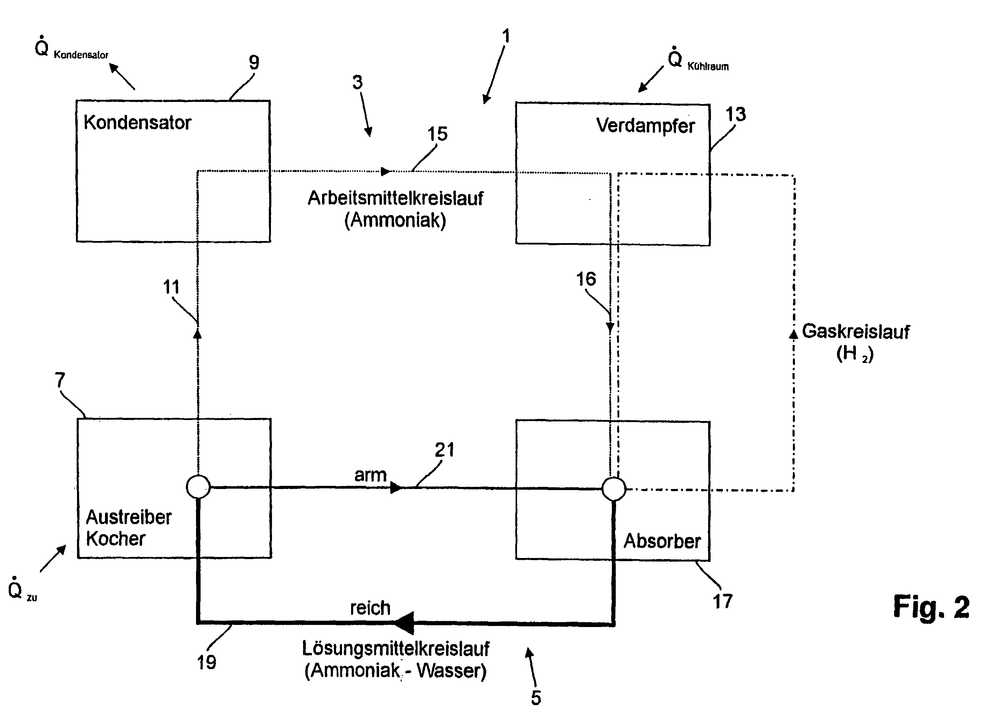

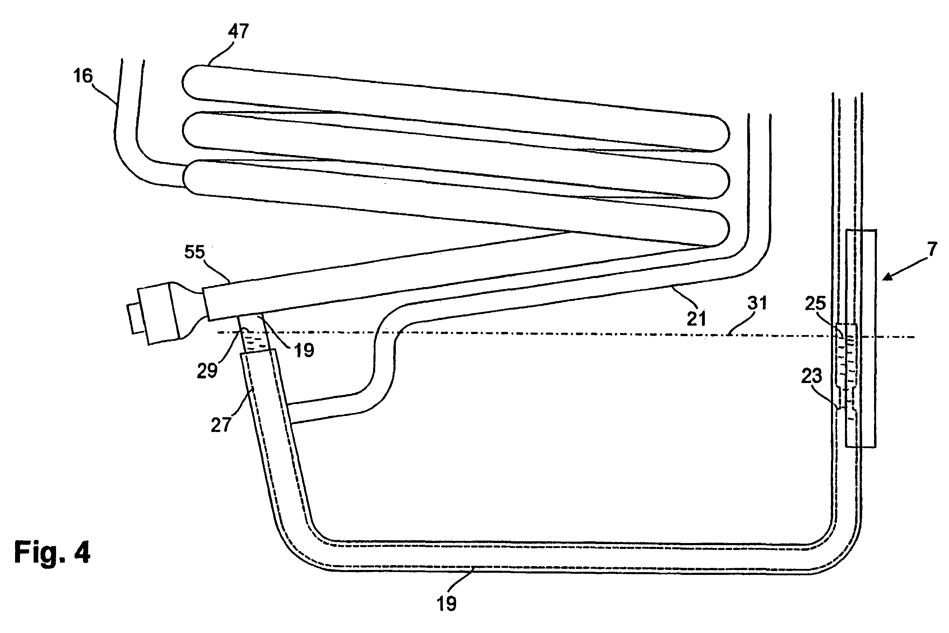

Eine erste Ausführungsform der Erfindung wird nachfolgend unter Bezugnahme auf die Fig. 1 bis 4 erläutert. In diesen Figuren ist eine Absorptionskühlanordnung 1 dargestellt, welche einen Arbeitsmittelkreislauf 3 und einen Lösungsmittelkreislauf 5 umfasst. Hierbei wird als Arbeitsmittel Ammoniak und als Lösungsmittel Wasser verwendet.

Der Arbeitsmittelkreislauf umfaßt einen Austreiber 7, einen Kondensator 9, eine Verbindungsleitung 11 zur Verbindung des Austreibers mit dem Kondensator 9, einen Verdampfer 13, eine Verbindungsleitung 15 zur Verbindung des Kondensators 9 mit dem Verdampfer 13, einen Absorber 17 und eine Verbindungsleitung 16 zur Verbindung des Absorbers 17 mit dem Austreiber 7.

Der Lösungsmittelkreislauf 5 umfaßt die gemeinsam mit dem Arbeitsmittelkreislauf genutzte Verbindungsleitung 19 zwischen Absorber 17 und Austreiber 7 sowie eine Verbindungsleitung 21 zur Rückführung des Lösungsmittels von dem Austreiber 7 zum Absorber 17.

Das Verbindungsrohr 19 zwischen Absorber 17 und Austreiber 7 ist U-förmig ausgebildet, so daß sich Lösungsmittel in einem tiefer angeordneten Bereich des U-Bogens als Flüssigkeitsvolumen ansammelt. Hierbei bildet das flüssige Lösungsmittel in einem in den Austreiber 7 hineinragenden Bereich 23 einen ersten Flüssigkeitsspiegel 25 innerhalb des Austreibers 7 aus. In einem von dem Austreiber 7 abgewandten Endbereich 27 der Verbindungsleitung 19 ist entsprechend ein zweiter Flüssigkeitsspiegel 29 ausgebildet, wobei die beiden Flüssigkeitsspiegel 25 und 29 im wesentlichen auf einem gemeinsamen Höhenniveau 31 liegen.

Die Verbindungsleitung 19 setzt sich innerhalb des Austreibers 7 in einem vertikal ausgerichteten Steigrohr 33 fort. Der Austreiber 7 umfaßt ferner eine in den Figuren schematisch dargestellte durch Gas oder elektrisch betriebene Heizmanschette 32, welche das Lösungsmittel im Bereich des Flüssigkeitsspiegels 25 aufheizt, so daß sich Dampfblasen bilden, die in dem Steigrohr 33 nach oben steigen. Durch die Bildung der Dampfblasen kann der Flüssigkeitsspiegel 25 zwar aufgerissen sein, jedoch lässt sich auch dabei dem Gemisch aus Dampfblasen und Lösungsmittel ein mittlerer Flüssigkeitsspiegel 25 zuordnen, der durch das Gewicht der Flüssigkeitssäule und der Dampfblasen in dem Steigrohr 33 sowie in dem an das Steigrohr 33 anschließenden Teil 23 der Verbindungsleitung 19 bestimmt ist.

Da in dem Steigrohr 33 der Dampfdruck des Arbeitsmittels höher ist als der des Lösungsmittels, bildet sich in der Verbindungsleitung 11 zwischen Austreiber 7 und Kondensator 9 eine Gasatmosphäre aus, in der im wesentlichen das Arbeitsmittel angereichert ist, wobei das an Arbeitsmittel abgereicherte Lösungsmittel in einem das Steigrohr 33 umschließenden Ringrohr 35 aufgrund der Wirkung der Schwerkraft nach unten fällt. Hierdurch bildet der Austreiber 7 auch eine Pumpe, die das an Arbeitsmittel arme Lösungsmittel auf ein größeres Höhenniveau bringt. Das Ringrohr 35 umschließt die Verbindungsleitung 19 im Bereich des U-Bogens, so daß dort ein Gegenstrom-Wärmetauscher 35 gebildet ist, wobei sich das in dem Austreiber 7 erhitzte Lösungsmittel in dem Ringrohr 35 entgegen der Strömungsrichtung des in der Verbindungsleitung 19 dem Austreiber 7 zufließende Lösungsmittel bewegt, wobei gleichzeitig das dem Austreiber 7 zufließende an Arbeitsmittel angereicherte Lösungsmittel vorgewärmt wird.

Das dem Kondensator 9 über die Verbindungsleitung 11 zugeführte ausgetriebene gasförmige Arbeitsmittel wird in dem Kondensator 9 unter Abgabe von Wärme an Kühlrippen 37 kondensiert und im wesentlichen in flüssiger Form über die Verbindungsleitung 15 dem Verdampfer 13 zugeführt. In dem Verdampfer 13 wird das flüssige Arbeitsmittel unter Aufnahme von Wärme verdampft. Die Oberfläche des Verdampfers 13 steht hierbei zweckmäßiger Weise mit beispielsweise einem in den Figuren nicht dargestellten Kühlfach eines Kühlschranks in wärmeleitender Verbindung, so daß die Aufnahme von Wärme durch das Arbeitsmittel in dem Verdampfer 13 zu einer Abkühlung des Kühlfachs führt.

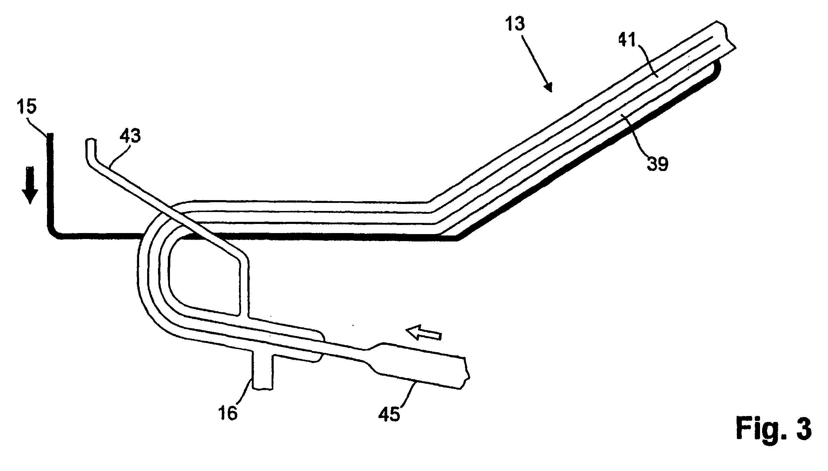

Der Verdampfer 13 ist, wie aus Fig. 3 besser ersichtlich ist, als Rohrschlangenverdampfer ausgeführt, wobei die Verbindungsleitung 15 das flüssige Arbeitsmittel auf einem erhöhten Höhenniveau in ein Ringrohr 39 einspeist. Weiter wird in das Ringrohr 39 ebenfalls auf erhöhtem Höhenniveau über ein konzentrisch innerhalb des Ringrohrs 39 angeordnetes Zentralrohr 41 Wasserstoff als Hilfsgas zugeführt. Das flüssige Arbeitsmittel rinnt an der Wand des schräg angeordneten Ringrohrs 39 herab und löst sich dabei in dem Hilfsgas unter Aufnahme von Wärme. Das Gemisch aus Hilfsgas und Arbeitsmittel wird über die Verbindungsleitung 16 aus dem Ringrohr 39 abgezogen und dem Absorber 17 zugeführt. Aus Fig. 3 ist weiter ersichtlich, daß in dem Bereich der Mündung der Verbindungsleitung 16 in das Ringrohr 39 ebenfalls ein Überlaufrohr 43 mündet, welches mit seinem anderen Ende an den Kondensator 9 angeschlossen ist, um von dort überschüssiges Hilfsgas abzuführen. Das in das Zentralrohr 41 eingespeiste Hilfsgas stammt aus dem Absorber 17 und wird von diesem über eine weitere Verbindungsleitung 45 dem Verdampfer 13 zugeführt.

Der Absorber 17 umfasst eine Gegenstrom-Austauschstrecke, welche durch ein schräg zur Horizontalen sich erstreckendes Rohr 47 gebildet ist, das unter Bildung von mehreren Rohrwindungen 49 schraubenartig gewickelt ist. In den Gegenstrom-Wärmetauscher 47 mündet die Verbindungsleitung 21 zur Zuführung des an Arbeitsmittel abgereicherten Lösungsmittels auf einem Höhenniveau 51, und die Verbindungsleitung 16 zur Zuführung des verdampften Arbeitsmittels mündet in den Gegenstrom-Wärmetauscher 47 auf einem in Bezug auf das Höhenniveau 51 niedrigeren Höhenniveau 53. In dem Gegenstrom-Wärmetauscher 47 bewegt sich dann das Lösungsmittel im Gegenstrom zu dem aufsteigenden gasförmigen Arbeitsmittel nach unten, wobei sich das Arbeitsmittel in dem nach unten rinnenden Lösungsmittel anreichert.

Das Rohr 47 des Gegenstrom-Wärmetauschers erstreckt sich über den Bereich, in dem es als Gegenstrom-Wärmetauscher wirkt, das heißt in dem Bereich zwischen der Mündung der Verbindungsleitung 16 und der Mündung der Verbindungsleitung 21, hinaus in einem Fortsatz 55 einstückig fort. Hierbei erstreckt sich dieser Fortsatz ebenfalls schräg zur Horizontalen weiter, so daß das in dem Gegenstrom-Wärmetauscher 47 nach unten rinnende Lösungsmittel ebenfalls in dem Fortsatz 55 nach unten rinnt. Im Bereich seines unteren Endes ist der Fortsatz 55 an einer Verbindungsstelle 57 unmittelbar mit dem zu dem Austreiber 7 entgegengesetzten Ende der Verbindungsleitung 19 angeschlossen.

Das an Arbeitsmittel angereicherte Lösungsmittel rinnt somit nach Durchlaufen der Gegenstrom-Austauschstrecke 47 in dem Fortsatz 55 weiter und tropft schließlich auf den innerhalb des Endes 27 der Verbindungsleitung 19 angeordneten Flüssigkeitsspiegel 29.

Da der Flüssigkeitsspiegel 29 durch den Endbereich 27 der Verbindungsleitung 19 umgrenzt ist, weist der Flüssigkeitsspiegel 29 eine Gesamtoberfläche auf, die im wesentlichen dem mittleren Querschnitt der Verbindungsleitung 19 entspricht. Diese vergleichsweise kleine Gesamtoberfläche des Flüssigkeitsspiegels 29 sorgt dafür, daß sich die Konzentration des Arbeitsmittels in dem Lösungsmittel unmittelbar unterhalb des Flüssigkeitsspiegels 29 sehr schnell an die Konzentration des Arbeitsmittels in dem Lösungsmittel anpaßt, wie es aus dem Absorber 17 austritt. Durch diese schnelle Anpassung der Arbeitsmittelkonzentration in dem Lösungsmittel im Bereich des Flüssigkeitsspiegels 29 überträgt sich diese Konzentration auch sehr schnell auf das über die Verbindungsleitung 19 dem Austreiber zugeführte Lösungsmittel, so daß ein stationärer Betrieb der Kühlanordnung relativ schnell erreicht wird.

Im folgenden werden Varianten der in den Fig. 1 bis 4 dargestellten Absorptionskühlanordnung erläutert. Hinsichtlich ihres Aufbaus und ihrer Funktion einander entsprechende Komponenten sind mit den Bezugszahlen aus den Fig. 1 bis 4 bezeichnet, jedoch zur Unterscheidung mit einem Buchstaben versehen. Zur Erläuterung wird auf die gesamte vorangehende Beschreibung Bezug genommen.

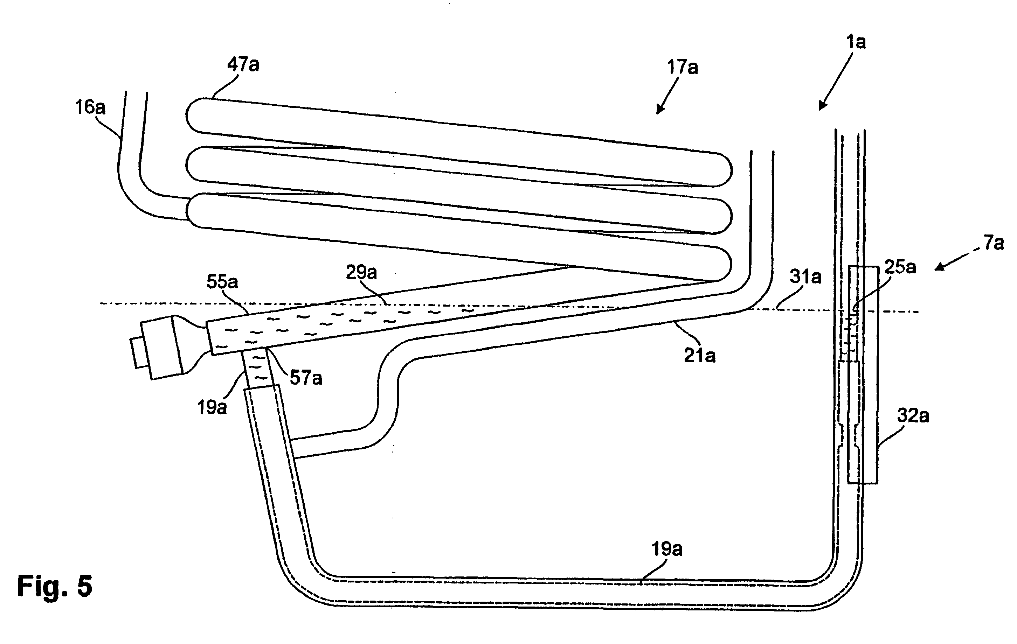

Eine in Figur 5 dargestellte Absorptionskühlanordnung 1a unterscheidet sich von der in den Figuren 1 bis 4 dargestellten Absorptionskühlanordnung alleine dadurch, daß ein Niveau 31a eines sich im Bereich eines Austreibers 7a in einer Verbindungsleitung 19a zwischen einem Absorber 17a und dem Austreiber 7a ausbildenden Flüssigkeitsspiegels 25a auf einem höheren Höhenniveau 31a derart liegt, daß sich ein über die Verbindungsleitung 19a mit dem Flüssigkeitsspiegel 25a, kommunizierender Flüssigkeitsspiegel 29a nicht, wie bei der Ausführungsform der Fig. 1 bis 4, in dem von dem Austreiber 7a entgegengesetzten Endbereich der Verbindungsleitung 19a ausbildet, sondern im Bereich eines Fortsatzes 55a eines eine Gegenstrom-Austauschstrecke bildenden schräg zur Horizontalen verlaufenden Rohres 47a des Absorbers 17a. Hierdurch erhält der Flüssigkeitsspiegel 29a bei kreisförmigen Querschnitt des Rohrfortsatzes 55a eine ovale Oberflächengestalt, wobei jedoch die Gesamtfläche des Flüssigkeitsspiegels 29a nicht wesentlich größer ist als der Querschnitt der Verbindungsleitung 19a. Insbesondere ist die Oberfläche des Flüssigkeitsspiegels 29a kleiner als das Zehnfache des mittleren Querschnitts der Verbindungsleitung 19a.

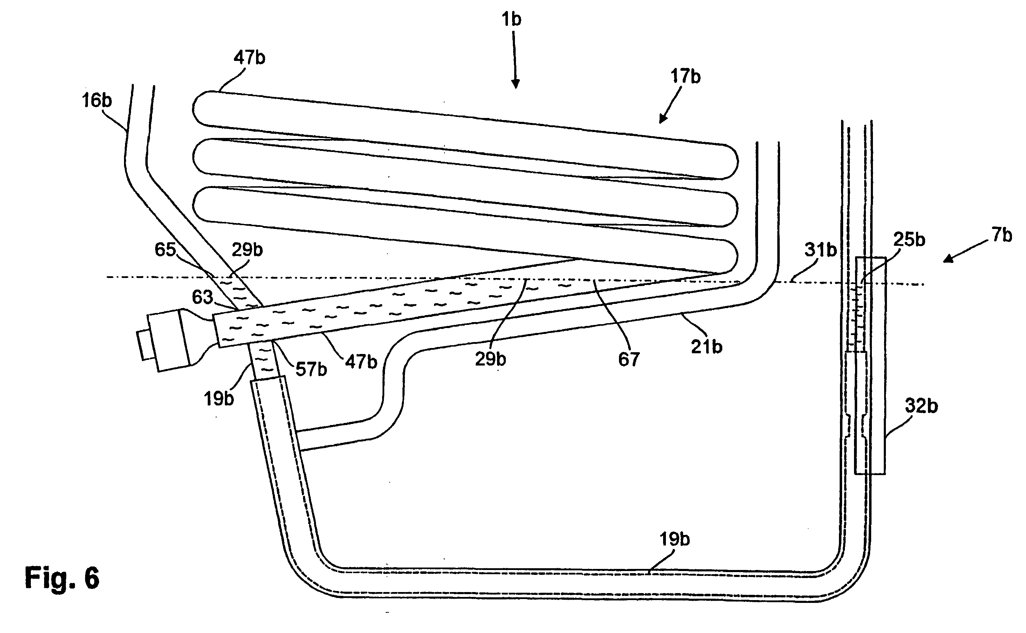

Eine in Fig. 6 dargestellte Absorptionskühlanordnung 1b ist hinsichtlich ihres Aufbaus den in den Fig. 1 bis 5 dargestellten Kühlanordnungen weitgehend ähnlich. Allerdings mündet bei der in Fig. 6 dargestellten Absorptionskühlanordnung 1b eine Verbindungsleitung 16b zum Überführen des verdampften Arbeitsmittels von einem Verdampfer zu einem Absorber 17b an einer Stelle in ein eine Gegenstrom-Austauschstrecke bildendes Rohr 47b, welche Stelle 63 unmittelbar benachbart zu einer Stelle 57b angeordnet ist, an der eine Verbindungsleitung 19b zwischen Absorber 17b und einem Austreiber 7b in das Rohr 47b mündet.

Sowohl die Verbindungsleitung 16b als auch die Verbindungsleitung 17b münden somit unmittelbar in das die Gegenstrom-Austauschstrecke bildende Rohr 47b.

Hierbei ist ein Flüssigkeitsspiegel 29b, der über die Verbindungsleitung 19b mit einem in dem Austreiber 7b ausgebildeten Flüssigkeitsspiegel 25b korrespondiert und mit diesem auf einem im wesentlichen gemeinsamen Niveau 31b angeordnet ist, höher angeordnet als die Mündungsstelle 63 der Verbindungsleitung 16b in die Gegenstrom-Austauschstrecke 47b. Hierdurch umfasst der Flüssigkeitsspiegel 29b zwei Teilflächen, nämlich eine innerhalb der Verbindungsleitung 16b angeordnete Teilfläche 65 und eine innerhalb des schräg verlaufenden Rohres 47b angeordnete Teilfläche 67.

Auch bei diesem Ausführungsbeispiel ist die Gesamtfläche des aus den beiden Teilflächen 65 und 67 zusammengesetzten Flüssigkeitsspiegels 29b vergleichsweise klein und insbesondere kleiner als beispielsweise das Zehnfache eines mittleren Rohrquerschnitts der Verbindungsleitung 19b.

Hierbei ist das im Zusammenhang mit der Beschreibung der Fig. 6 erläuterte Flüssigkeitsniveau 31b für einen Startzustand der Kühlanordnung dargestellt. Im Verlauf der Startphase der Kühlanordnung wird das Niveau 31b des Flüssigkeitsspiegels 29b absinken, so daß die Mündung der Verbindungsleitung 16b in die Gegenstrom- Austauschstrecke 47b oberhalb des Flüssigkeitsspiegels 29b angeordnet ist und das über die Verbindungsleitung 16b dem Absorber 17b zugeführte gasförmige Arbeitsmittel ungehindert in die Gegenstrom-Austauschstrecke 47b eintreten und in dieser aufsteigen kann.

Vorangehend wurden die Größen des dem Flüssigkeitsspiegel in dem Austreiber korrespondierenden Flüssigkeitsspiegels jeweils bezogen auf den Querschnitt der Verbindungsleitungen zwischen Absorber und Austreiber. Es ist jedoch auch möglich, die Größen der Flüssigkeitsspiegel auch auf den Querschnitt der Verbindungsleitung zum Zuführen des an Arbeitsmittel abgereicherten Lösungsmittels von dem Austreiber zu dem Absorber zu beziehen. Hierbei ist dann ein charakteristischer mittlerer Querschnitt dieser Verbindungsleitung im Bereich des Flüssigkeitswärmetauschers oder in einem außerhalb des Flüssigkeitswärmetauschers liegenden Bereich zu bilden. Ferner ist es auch denkbar, die Größe des Flüssigkeitsspiegels auf den Querschnitt einer weiteren Verbindungsleitung der Kühlanordnung zu beziehen. Insbesondere ist es auch denkbar, die Größe des Flüssigkeitsspiegels auf den Querschnitt des Rohres zu beziehen, welches die Gegenstrom-Austauschstrecke des Absorbers bildet, wobei auch dort der Flüssigkeitsspiegel dann klein im Vergleich zu dem Rohrquerschnitt ausgebildet ist, nämlich insbesondere kleiner als das Fünffache, insbesondere kleiner als das Dreifache, insbesondere kleiner als der Querschnitt Rohres und weiter insbesondere kleiner als die Hälfte des Querschnitts des Rohres.

## Patentansprüche

1. Absorptionskühlanordnung, umfassend:
- einen Austreiber (7) zum Austreiben eines Arbeitsmittels in Gasform aus angereichertem Lösungsmittel zum Abreichem des Arbeitsmittels in einem Lösungsmittelkreislauf (5),
- eine erste Verbindungsleitung (11) zum Überführen des ausgetriebenen Arbeitsmittels von dem Austreiber (7) zu einem Kondensator (9) zum Kondensieren des ausgetriebenen Arbeitsmittels,
- eine zweite Verbindungsleitung (15) zum Überführen des kondensierten Arbeitsmittels von dem Kondensator (9) zu einem Verdampfer (13) zum Verdampfen des kondensierten Arbeitsmittels unter Aufnahme von Wärme aus einem zu kühlenden Raum,
- eine dritte Verbindungsleitung (16) zum Überführen des verdampften Arbeitsmittels von dem Verdampfer (13) zu einer Absorberanordnung (17),
- eine vierte Verbindungsleitung (21, 35) zum Überführen des an Arbeitsmittel abgereicherten Lösungsmittels von dem Austreiber (7) zu der Absorberanordnung (17), wobei die Absorberanordnung (17) eine sich über eine vorbestimmte Höhendifferenz (51, 53) erstreckende Gegenstrom-Austauschstrecke (47) aufweist, in welche die dritte Verbindungsleitung (16) auf einem niedrigen Höhenniveau (53) mündet und in welche die vierte Verbindungsleitung (21, 35) auf einem hohen Höhenniveau (51) mündet, so daß sich in der Absorberanordnung (17) das Arbeitsmittel in dem Lösungsmittel anreichert,
- eine fünfte Verbindungsleitung (19) zum Überführen des mit Arbeitsmittel angereicherten Lösungsmittels von dem Absorber (17) zu dem Austreiber (7),
wobei wenigstens ein Teil der fünften Verbindungsleitung (19) mit einem Flüssiganteil des Lösungsmittels gefüllt ist und in einem Bereich (23) eines dem Austreiber (7) zugewandten Endes der fünften Verbindungsleitung (19) oder in dem Austreiber (7) ein erster Flüssigkeitsspiegel (25) des Lösungsmittels ausgebildet ist und ein über die fünfte Verbindungsleitung (19) mit dem ersten Flüssigkeitsspiegel (25) korrespondierender zweiter Flüssigkeitsspiegel (29) ausgebildet ist,
**dadurch gekennzeichnet, daß** die Gesamtoberfläche des zweiten Flüssigkeitsspiegels (29) kleiner ist als das zehnfache, insbesondere kleiner als das achtfache, insbesondere kleiner das fünffache, insbesondere kleiner als das dreifache und insbesondere kleiner als das doppelte eines mittleren Querschnitts der fünften Verbindungsleitung (19) oder der vierten Verbindungsleitung (21, 35) ist.

2. Absorptionskühlanordnung nach Anspruch 1, **dadurch gekennzeichnet, daß** der zweite Flüssigkeitsspiegel (29) umgrenzt ist durch wenigstens eine oder mehrere der Komponenten einer Gruppe von Komponenten, welche aus
- der fünften Verbindungsleitung (19), und zwar in einem Bereich eines dem Absorber (17) zugewandten Endes (27) derselben,
- dem Absorber (17) sowie
- der dritten Verbindungsleitung (16), und zwar in einem Bereich eines der Mündung in den Absorber (17) zugewandten Endes derselben,
besteht.

3. Absorptionskühlanordnung nach einem der Ansprüche 1 und 2, wobei die gesamte Oberfläche des zweiten Flüssigkeitsspiegels (29) wenigstens während des stationären Betriebs der Anordnung durch die fünfte Verbindungsleitung (19) umgrenzt ist.

4. Absorptionskühlanordnung nach einem der Ansprüche 1 bis 3, wobei die Oberfläche des zweiten Flüssigkeitsspiegels (29a; 29b) wenigstens während des stationären Betriebs der Anordnung durch den Absorber (17a; 17b) umgrenzt ist.

5. Absorptionskühlanordnung nach Anspruch 4, wobei die Gegenstrom-Austauschstrecke ein schräg zur Horizontalen sich erstreckendes Rohr (47a; 47b) umfaßt und die Oberfläche des zweiten Flüssigkeitsspiegels (29a; 29b) durch das Rohr der Gegenstrom-Austauschstrecke oder einen Fortsatz (55a) desselben umgrenzt ist.

6. Absorptionskühlanordnung nach Anspruch 5, wobei der Fortsatz (55a) einstückig mit dem Rohr der Gegenstrom-Austauschstrecke (47) verbunden ist.

7. Absorptionskühlanordnung nach einem der Ansprüche 1 bis 6, wobei während einer Startphase des Betriebs der Anordnung der zweite Flüssigkeitsspiegel (29b) durch die dritte Verbindungsleitung (16b) umgrenzt ist.

8. Absorptionskühlanordnung nach einem der Ansprüche 1 bis 7, wobei die Gegenstrom-Austauschstrecke ein schräg zur Horizontalen sich erstreckendes Rohr (47) umfaßt, welches sich ausgehend von einer Stelle, an der die dritte Verbindungsleitung (16) in den Absorber (17) mündet, in zwei entgegengesetzte Richtungen erstreckt.

9. Absorptionskühlanordnung nach Anspruch 8, wobei die fünfte Verbindungsleitung (19; 19b) unmittelbar in das Rohr (47b) der Gegenstrom-Austauschstrecke oder einen Fortsatz (55) desselben mündet.

10. Absorptionskühlanordnung nach einem der Ansprüche 1 bis 9, wobei eine sich auf einem hohen Höhenniveau aus dem Absorber herauserstreckende sechste Verbindungsleitung (45) zum Überführen eines Hilfsgases von dem Absorber (17) zu dem Verdampfer (13) vorgesehen ist, wobei sich in dem Verdampfer (13) das Arbeitsmittel in dem Hilfsgas anreichert.

11. Absorptionskühlanordnung nach einem der Ansprüche 1 bis 10, wobei sich die vierte Verbindungsleitung (21) und die fünfte Verbindungsleitung (19) zur Bildung eines Flüssigkeitswärmetauschers bereichsweise unter Wärmekontakt nebeneinander erstrecken.

12. Absorptionskühlanordnung nach einem der Ansprüche 1 bis 11, **dadurch gekennzeichnet, daß** die Absorptionsfläche in etwa der Absorptionsfläche einer Anordnung mit einem Vorratsbehälter **dadurch** entspricht, daß die Absorptionsfläche bei gleichbleibender Gesamtabsorptionsfläche durch Vergrößerung der Absorptionsfläche der Gegenstrom-Austauschstrecke (47) vergrößert wird.

13. Absorptionskühlanordnung nach Anspruch 12, **dadurch gekennzeichnet, daß** die Absorptionsfläche durch Verlängerung der Gegenstrom-Austauschstrecke (47) vergrößert wird.

14. Absorptionskühlanordnung nach Anspruch 12, **dadurch gekennzeichnet, daß** die Absorptionsfläche durch eine Querschnittsvergrößerung der Rohrleitung der Gegenstrom-Austauschstrecke (47) vergrößert wird.

15. Absorptionskühlanordnung nach Anspruch 12, **dadurch gekennzeichnet, daß** die Absorptionsfläche durch Oberflächenvergrößerung der Innenwandung der Rohrleitung der Gegenstrom-Austauschstrecke (47) mittels an der Wandung angeordneter Rillen vergrößert wird.

16. Absorptionskühlanordnung nach Anspruch 15, **dadurch gekennzeichnet, daß** die Rillen in zwei verschiedenen Richtungen verlaufen und sich jeweils kreuzen.

## Claims

1. Absorption cooling arrangement, comprising:
- an expeller (7) for expelling a working agent in gaseous form from enriched solvent in order to deplete the working agent in a solvent circuit (5),
- a first connection line (11) for transferring the expelled working agent from the expeller (7) to a condenser (9) for condensing the expelled working agent,
- a second connection line (15) for transferring the condensed working agent from the condenser (9) to an evaporator (13) for evaporation of the condensed working agent while taking up heat from a space to be cooled,
- a third connection line (16) for transferring the evaporated working agent from the evaporator (13) to an absorber arrangement (17),
- a fourth connection line (21, 35) for transferring the solvent that has been depleted of working agent from the expeller (7) to the absorber arrangement (17), wherein the absorber arrangement (17) has a counter-current exchange section (47) extending over a predetermined height difference (51, 53), into which section (47) the third connection line (16) opens at a low height level (53) and into which the fourth connection line (21, 35) opens at a high height level (51), so that the working agent becomes enriched in the solvent in the absorber arrangement (17),
- a fifth connection line (19) for transferring the solvent enriched with working agent from the absorber (17) to the expeller (7),
wherein at least part of the fifth connection line (19) is filled with a liquid fraction of the solvent and a first liquid level (25) of the solvent is formed in a region (23) of an end of the fifth connection line (19), which end is towards the expeller (7), or in the expeller (7), and a second liquid level (29) corresponding *via* the fifth connection line (19) to the first liquid level (25) is formed,
**characterised in that** the overall surface of the second liquid level (29) is smaller than ten times, especially smaller than eight times, especially smaller than five times, especially smaller than three times and especially smaller than two times an average cross-section of the fifth connection line (19) or of the fourth connection line (21, 35).

2. Absorption cooling arrangement according to claim 1, **characterised in that** the second liquid level (29) is bounded by at least one or more of the components of a group of components that consists of
- the fifth connection line (19), and more specifically in a region of an end (27) thereof which is towards the absorber (17),
- the absorber (17) and
- the third connection line (16), and more specifically in a region of an end thereof which is towards the point of entry into the absorber (17).

3. Absorption cooling arrangement according to either claim 1 or claim 2, wherein the overall surface of the second liquid level (29) is bounded by the fifth connection line (19) at least during stationary operation of the arrangement.

4. Absorption cooling arrangement according to any one of claims 1 to 3, wherein the surface of the second liquid level (29a; 29b) is bounded by the absorber (17a; 17b) at least during stationary operation of the arrangement.

5. Absorption cooling arrangement according to claim 4, wherein the counter-current exchange section comprises a pipe (47a; 47b) which is inclined to the horizontal, and the surface of the second liquid level (29a; 29b) is bounded by the pipe of the counter-current exchange section or a continuation (55a) thereof.

6. Absorption cooling arrangement according to claim 5, wherein the continuation (55a) is joined in one piece to the pipe of the counter-current exchange section (47).

7. Absorption cooling arrangement according to any one of claims 1 to 6, wherein, during a starting phase of operation of the arrangement, the second liquid level (29b) is bounded by the third connection line (16b).

8. Absorption cooling arrangement according to any one of claims 1 to 7, wherein the counter-current exchange section comprises a pipe (47) which is inclined to the horizontal and which extends in two opposite directions starting from a point at which the third connection line (16) opens into the absorber (17).

9. Absorption cooling arrangement according to claim 8, wherein the fifth connection line (19; 19b) opens directly into the pipe (47b) of the counter-current exchange section or into a continuation (55) thereof.

10. Absorption cooling arrangement according to any one of claims 1 to 9, wherein a sixth connection line (45) which extends out of the absorber at a high height level is provided for transferring an auxiliary gas from the absorber (17) to the evaporator (13), the working agent becoming enriched in the auxiliary gas in the evaporator (13).

11. Absorption cooling arrangement according to any one of claims 1 to 10, wherein the fourth connection line (21) and the fifth connection line (19) extend in regions beside each other with thermal contact to form a liquid heat-exchanger.

12. Absorption cooling arrangement according to any one of claims 1 to 11, **characterised in that** the absorption area approximately corresponds to the absorption area of an arrangement having a reservoir by virtue of the fact that the absorption area is enlarged by enlarging the absorption area of the counter-current exchange section (47) while the total absorption area remains the same.

13. Absorption cooling arrangement according to claim 12, **characterised in that** the absorption area is enlarged by lengthening the counter-current exchange section (47).

14. Absorption cooling arrangement according to claim 12, **characterised in that** the absorption area is enlarged by enlarging the cross-section of the pipework of the counter-current exchange section (47).

15. Absorption cooling arrangement according to claim 12, **characterised in that** the absorption area is enlarged by enlarging the surface of the inside wall of the pipework of the counter-current exchange section (47) by means of grooves arranged in the wall.

16. Absorption cooling arrangement according to claim 15, **characterised in that** the grooves extend in two different directions and intersect.

## Revendications

1. Unité frigorifique à absorption, comprenant :
- un dispositif d'expulsion (7) pour expulser une substance active gazeuse à partir d'un solvant enrichi pour appauvrir la substance active dans un circuit de solvant (5),
- une première conduite de raccordement (11) pour transporter la substance active expulsée du dispositif d'expulsion (7) à un condenseur (9) pour condenser la substance active expulsée,
- une deuxième conduite de raccordement (15) pour transporter la substance active condensée du condenseur (9) à un évaporateur (13) pour évaporer la substance active condensée par absorption de chaleur à partir d'une pièce à refroidir,
- une troisième conduite de raccordement (16) pour transporter la substance active évaporée de l'évaporateur (13) à une unité d'absorbeur (17),
- une quatrième conduite de raccordement (21, 35) pour transporter le solvant appauvri en substance active du dispositif d'expulsion (7) à l'unité d'absorbeur (17), l'unité d'absorbeur (17) présentant une section d'échange à contre-courant (47), s'étendant sur une différence de hauteur (51, 53) prédéterminée, dans laquelle débouche la troisième conduite de raccordement (16) à un niveau de hauteur bas (53) et dans laquelle débouche la quatrième conduite de raccordement (21, 35) à un niveau de hauteur élevé (51), de sorte que dans l'unité d'absorbeur (17), la substance active s'enrichit dans le solvant,
- une cinquième conduite de raccordement (19) pour transporter le solvant enrichi en substance active de l'absorbeur (17) au dispositif d'expulsion (7),
dans laquelle au moins une partie de la cinquième conduite de raccordement (19) est remplie d'une part liquide du solvant, et au niveau (23) d'une extrémité, orientée vers le dispositif d'expulsion (7), de la cinquième conduite de raccordement (19) ou dans le dispositif d'expulsion (7), un premier niveau de liquide (25) du solvant est réalisé, et un deuxième niveau de liquide (29) communiquant avec le premier niveau de liquide (25) à travers la cinquième conduite de raccordement (19) est réalisé,
**caractérisée en ce que** la surface totale du deuxième niveau de liquide (29) est inférieure à dix fois, en particulier inférieure à huit fois, en particulier inférieure à cinq fois, en particulier inférieure à trois fois et en particulier inférieure à deux fois une section transversale moyenne de la cinquième conduite de raccordement (19) ou de la quatrième conduite de raccordement (21, 35).

2. Unité frigorifique à absorption selon la revendication 1, **caractérisée en ce que** le deuxième niveau de liquide (29) est délimité par au moins un ou plusieurs des composants d'un groupe de composants, composé
- de la cinquième conduite de raccordement (19), notamment au niveau d'une extrémité (27) de celle-ci orientée vers l'absorbeur (17),
- de l'absorbeur (17), ainsi que
- de la troisième conduite de raccordement (16), notamment au niveau d'une extrémité de celle-ci orientée vers l'embouchure dans l'absorbeur (17).

3. Unité frigorifique à absorption selon l'une quelconque des revendications 1 et 2, dans laquelle toute la surface du deuxième niveau de liquide (29) est délimitée par la cinquième conduite de raccordement (19), au moins pendant le fonctionnement stationnaire de l'unité.

4. Unité frigorifique à absorption selon l'une quelconque des revendications 1 à 3, dans laquelle la surface du deuxième niveau de liquide (29a ; 29b) est délimitée par l'absorbeur (17a ; 17b), au moins pendant le fonctionnement stationnaire de l'unité.

5. Unité frigorifique à absorption selon la revendication 4, dans laquelle la section d'échange à contre-courant comprend un tuyau (47a ; 47b) s'étendant de façon oblique par rapport à l'horizontale et la surface du deuxième niveau de liquide (29a ; 29b) est délimitée par le tuyau de la section d'échange à contre-courant ou un prolongement (55a) du tuyau.

6. Unité frigorifique à absorption selon la revendication 5, dans laquelle le prolongement (55a) est relié de façon solidaire au tuyau de la section d'échange à contre-courant (47).

7. Unité frigorifique à absorption selon l'une quelconque des revendications 1 à 6, dans laquelle le deuxième niveau de liquide (29b) est délimité par la troisième conduite de raccordement (16b) pendant une phase de démarrage du fonctionnement de l'unité.

8. Unité frigorifique à absorption selon l'une quelconque des revendications 1 à 7, dans laquelle la section d'échange à contre-courant comprend un tuyau (47) s'étendant de façon oblique par rapport à l'horizontale, le tuyau s'étendant dans deux directions opposées à partir d'un endroit où la troisième conduite de raccordement (16) débouche dans l'absorbeur (17).

9. Unité frigorifique à absorption selon la revendication 8, dans laquelle la cinquième conduite de raccordement (19 ; 19b) débouche directement dans le tuyau (47b) de la section d'échange à contre-courant ou un prolongement (55) du tuyau.

10. Unité frigorifique à absorption selon l'une quelconque des revendications 1 à 9, dans laquelle est prévue une sixième conduite de raccordement (45), s'étendant à un niveau de hauteur élevé hors de l'absorbeur, pour transporter un gaz auxiliaire de l'absorbeur (17) à l'évaporateur, la substance active s'enrichissant dans le gaz auxiliaire dans l'évaporateur (13).

11. Unité frigorifique à absorption selon l'une quelconque des revendications 1 à 10, dans laquelle la quatrième conduite de raccordement (21) et la cinquième conduite de raccordement (19) s'étendent localement côte à côte en contact thermique pour former un échangeur thermique de liquide.

12. Unité frigorifique à absorption selon l'une quelconque des revendications 1 à 11, **caractérisée en ce que** la surface d'absorption correspond approximativement à la surface d'absorption d'une unité avec un réservoir, **en ce que** la surface d'absorption est agrandie par l'agrandissement de la surface d'absorption de la section d'échange à contre-courant (47), la surface d'absorption totale restant constante.

13. Unité frigorifique à absorption selon la revendication 12, **caractérisée en ce que** la surface d'absorption est agrandie par le prolongement de la section d'échange à contre-courant (47).

14. Unité frigorifique à absorption selon la revendication 12, **caractérisée en ce que** la surface d'absorption est agrandie par un agrandissement de section transversale de la conduite de la section d'échange à contre-courant (47).

15. Unité frigorifique à absorption selon la revendication 12, **caractérisée en ce que** la surface d'absorption est agrandie par l'agrandissement de surface de la paroi intérieure de la conduite de la section d'échange à contre-courant (47) au moyen de cannelures disposées sur la paroi.

16. Unité frigorifique à absorption selon la revendication 15, **caractérisée en ce que** les cannelures s'étendent dans deux directions différentes et se croisent respectivement.
